**Europäisches Patentamt**

**European Patent Office**

**Office européen des brevets**

(19)

(11) Veröffentlichungsnummer : **0 040 684**
**B1**

## (12) EUROPÄISCHE PATENTSCHRIFT

(45) Veröffentlichungstag der Patentschrift :
22.06.83

(21) Anmeldenummer : 81102273.0

(22) Anmeldetag : 26.03.81

(51) Int. Cl.³ : **B 23 Q  1/26**

(54) **Präzisionslängenmesseinrichtung.**

(30) Priorität : 02.05.80 DE 3016908

(43) Veröffentlichungstag der Anmeldung :
02.12.81 Patentblatt 81/48

(45) Bekanntmachung des Hinweises auf die Patenterteilung : 22.06.83 Patentblatt 83/25

(84) Benannte Vertragsstaaten :
AT CH FR GB IT LI NL SE

(56) Entgegenhaltungen :
CH A 225 625
DE A 1 477 603
DE A 1 548 870
DE A 2 116 943
DE A 2 735 154
DE C 441 449
GB A 1 062 427

(73) Patentinhaber : Dr. Johannes Heidenhain GmbH
Nansenstrasse 17
D-8225 Traunreut (DE)

(72) Erfinder : Nelle, Günther, Dr.-Ing.
Eichenweg 12
D-8221 Bergen (DE)

EP 0 040 684 B1

Präzisionslängenmeßeinrichtung

Die Erfindung bezieht sich auf eine Präzisionslängenmeßeinrichtung nach dem Oberbegriff des Anspruches 1.

Es ist eine solche Präzisionslängenmeßeinrichtung bekannt, bei der zur Führung der Abtasteinrichtung am Hohlprofil ein fester Streifen aus Glas mit einem elastischen Kleber angebracht ist (DE-AS-26 43 304).

Es ist ferner eine Meßeinrichtung der genannten Art bekannt, bei der der Maßstab auf einem Zwischenträger montiert ist, wobei diese Einheit eine der Führungsflächen für die Abtasteinrichtung bildet (DE-PS-27 27 769).

Es ist ferner aus der DE-AS-11 99 510 eine Meßeinrichtung bekannt, bei der Maßstab und Führungseinrichtung miteinander verkoppelt sind.

Nachteilig ist bei den bekannten Meßeinrichtungen der komplizierte Aufbau und die aufwendige Justierung, vor allem bei großen Meßlängen.

Auch ist die Lebensdauer eingeschränkt, wenn die Führungsflächen zum Teil durch Innenflächen des relativ weichen Aluminiums des Hohlprofiles gebildet werden.

Es ist bekannt (DE-C-441 449) zur Verringerung des Verschleißes an Führungsflächen diese als Stahlbänder auszuführen, die direkt an dem die Führungsflächen tragenden Führungsteil an einer Stelle fixiert sind und ansonsten lose aufliegen.

Der Erfindung liegt die Aufgabe zugrunde, eine Präzisionslängenmeßeinrichtung zu schaffen, die die genannten Nachteile nicht aufweist und die eine genügend ebene, gerade und verschleißarme Führung der Abtasteinrichtung bei einfachem Aufbau ermöglicht.

Diese Aufgabe wird durch die im kennzeichnenden Teil des Anspruches 1 angegebenen Merkmale gelöst.

Vorteilhafte Weiterbildungen der Erfindung finden sich in den Unteransprüchen.

Die Vorteile der Erfindung liegen darin, daß in an sich bekannter Weise die Führungsflächen kaum Verschleiß unterliegen, als Bandmaterial kostengünstig zur Verfügung stehen, leicht montierbar sind und gegebenenfalls senkrecht zur Meßrichtung einstellbar sind. Außerdem sinkt bei geeigneter Materialkombination die Reibung zwischen Abtasteinrichtung und Führungsflächen. Temperaturbedingte Spannungen zwischen Trägerkörper und Bandmaterial entfallen bei lose eingeschobenem Band.

Bei gegebener Lebensdauer lassen sich wegen des verschleißfesten Bandmaterials höhere Anpreßkräfte für die Anfederung der Abtasteinrichtung einstellen, was höhere Sicherheit gegen Abheben der Abtasteinrichtung von den Führungsflächen bedeutet, wodurch die Erschütterungsempfindlichkeit spürbar verringert wird.

Anhand der Zeichnungen soll an Ausführungsbeispielen die Erfindung noch näher erläutert werden.

Es zeigen :

Figur 1 den schematischen Querschnitt durch eine Längenmeßeinrichtung,

Figur 2 eine Längsansicht einer Längenmeßeinrichtung im Schnitt,

Figur 3 einen weiteren Querschnitt durch eine andere Ausführungsform einer Längenmeßeinrichtung,

Figur 4 eine geschnittene Längsansicht einer Längenmeßeinrichtung gemäß Figur 3 mit teilweise dargestellter Abtasteinrichtung.

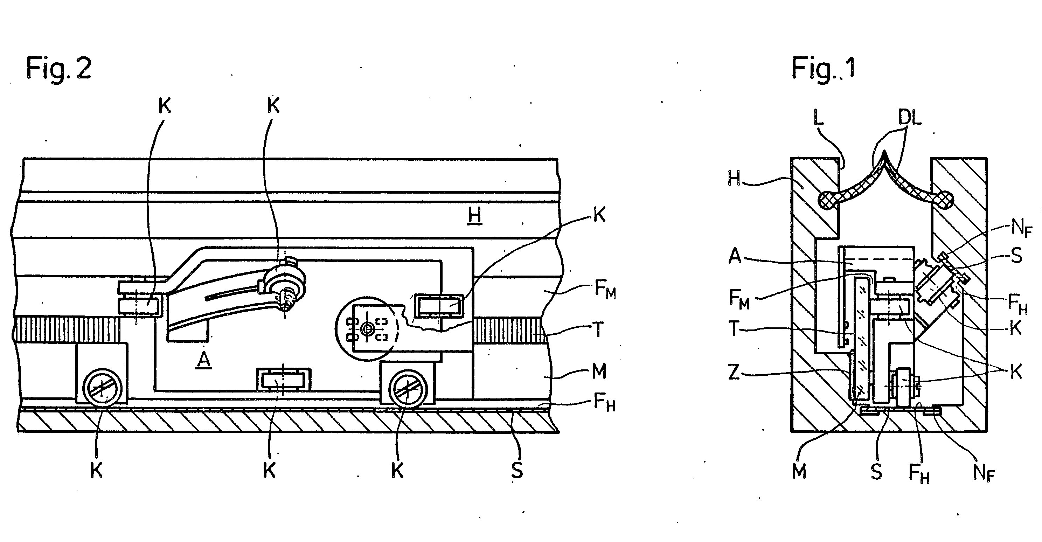

Eine in Figur 1 dargestellte Meßeinrichtung besteht aus einem Maßstab M mit einer Teilung T. Eine Abtasteinrichtung A tastet fotoelektrisch die Teilung T des Maßstabes M ab. Der Maßstab M ist über eine elastische Zwischenschicht Z an einer Innenfläche eines Hohlprofiles H angebracht. Um eine exakte Abtastung der Teilung T durch die Abtasteinrichtung A zu gewährleisten, wird die Abtasteinrichtung A an Führungsflächen F geführt. Eine der Führungsflächen $F_M$ befindet sich direkt am Maßstab M.

Weitere Führungsflächen $F_H$ befinden sich im Hohlprofil H. Das Hohlprofil H weist Nuten $N_F$ auf, in die flexible Stahlbänder S lose eingeschoben sind. Die zum Inneren des Hohlprofiles H weisenden Oberflächen der Stahlbänder S bilden die Führungsflächen $F_H$ für die Abtasteinrichtung A. Die an der Abtasteinrichtung A angeordneten Kugellager K lassen sich durch nicht dargestellte Gleitschuhe ersetzen. Gegebenenfalls kann eine Beschichtung der Stahlbänder mit reibungsverminderndem Kunststoff vorteilhaft sein.

Durch einen mit Dichtlippen DL abgedichteten Längsschlitz L wird ein an der Abtasteinrichtung A beweglich angekoppelter Mitnehmer aus dem Hohlprofil H herausgeführt. Diese Maßnahme ist auch im Stand der Technik hinreichend abgehandelt, so daß hier eine zeichnerische Darstellung nicht erforderlich erscheint.

Die in Figur 2 geschnitten dargestellte Meßeinrichtung entspricht der Einrichtung in Figur 1. Die in Draufsicht erkennbaren Kugellager K stützen die Abtasteinrichtung A direkt am Maßstab M neben der Teilung T ab. Die in Seitenansicht erkennbaren Kugellager K laufen dagegen auf einer Führungsfläche $F_H$, die von einem Stahlband S gebildet wird, das in einer Nut $N_F$ (Figur 1) lose eingeschoben ist.

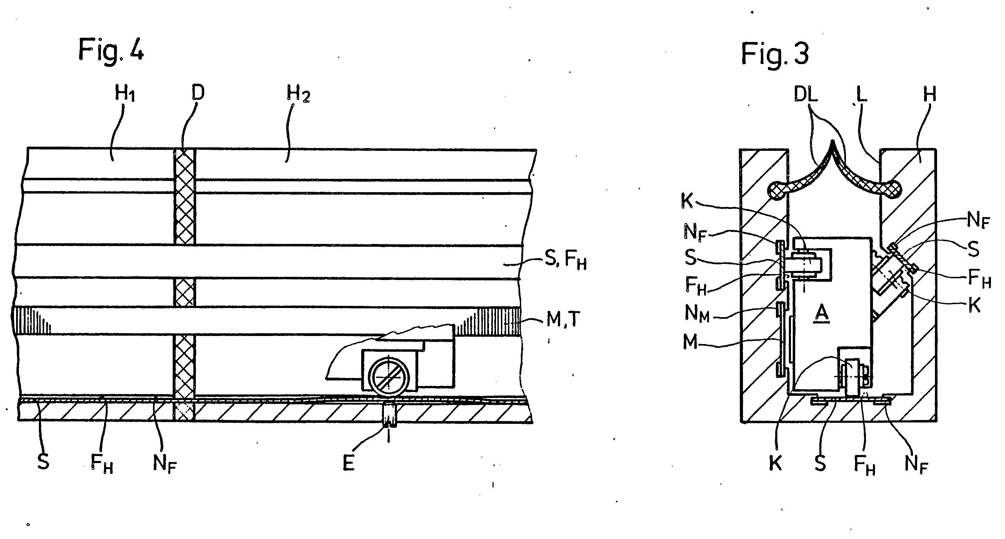

In der Figur 3 ist eine Längenmeßeinrichtung ähnlich wie die in den Figuren 1 und 2 gezeigte schematisch dargestellt. Ein Hohlprofil H weist einen durch Dichtlippen DL in bekannter Weise abgedichteten Längsschlitz L auf, durch den ein nicht dargestellter Mitnehmer hindurchragt, der beweglich an eine Abtasteinrichtung A angekoppelt ist. Diese Abtasteinrichtung A wird ausschließlich an Führungsflächen $F_H$ geführt, die von flexiblen Stahlbändern S gebildet werden. Die Stahlbänder S sind in Nuten $N_F$ im Hohlprofil

H lose eingeschoben. Eine weitere Nut $N_M$ im Hohlprofil H ist zur Aufnahme des Maßstabes M vorgesehen. Ein Stahlband, das mit einer Teilung T versehen ist, ist in die Nut $N_M$ lose eingeschoben und mit geeigneten Mitteln an einem Endpunkt fixiert.

Die Fixierung erfolgt direkt an einem der relativ zueinander beweglichen Objekte. Wenn diese Objekte aus Stahl hergestellt sind (Bett und Schlitten einer Maschine), ergeben sich für Maßstab M und Objekt nahezu gleiche Bedingungen bei thermisch bedingten Längenänderungen. Wegen der Längsverschieblichkeit des Maßstabes M in der Nut $N_M$ im Hohlprofil H werden keine durch Temperaturgang hervorgerufenen Zwangskräfte vom zu messenden Objekt auf den Maßstab M übertragen.

Das Hohlprofil H wird vorteilhaft aus stranggepreßtem Leichtmetall hergestellt. Die zusätzlichen Nuten N beeinflussen dann lediglich geringfügig die Kosten des Preßwerkzeuges. Die Herstellung des Hohlprofiles H kann in Standardlängen erfolgen.

Eine in Figur 4 gezeigte Längenmeßeinrichtung ist aus mehreren Hohlprofilteilstücken $H_1$ und $H_2$ zusammengestellt und durch Dichtelemente D an den Stirnseiten zueinander abgedichtet. Die einzelnen Hohlprofilteilstücke $H_1$, $H_2$ sind unabhängig von einander an einem der zu messenden Objekte angebracht (DE-PS-27 27 769). Dabei entstehen an den Stoßstellen der einzelnen Hohlprofilteilstücke $H_1$, $H_2$ Lücken. Durch geeignete Maßnahmen kann man die Abtasteinrichtung und den Maßstabträgerkörper so ausbilden, daß am Stoß der Hohlprofilstücke $H_1$, $H_2$ keine Führungsfehler und keine Meßfehler entstehen (DE-PS-27 06 926, DE-PS-27 27 769).

Gemäß der Längenmeßeinrichtung in Figur 4 werden sowohl der Maßstab M als auch die Führungsflächen $F_H$ durch flexible Stahlbänder S realisiert. Nach der Montage der Hohlprofilteilstücke $H_1$, $H_2$ an einem der zu messenden Objekte werden die Stahlbänder in ihrer endgültigen Länge in die Nuten $N_M$ und $N_F$ eingezogen und fixiert.

Die Lücken an den Stoßstellen werden von den durchgehenden Stahlbändern überbrückt, denn sowohl der Maßstab M als auch die Führungsflächen $F_H$ weisen durchgehende Oberflächen auf. Probleme an den Stoßstellen der Hohlprofilteilstücke $H_1$, $H_2$ sind hinsichtlich der Teilungsabtastung und der Führung nicht mehr gegeben.

Durch entsprechende Gestaltung der Nuten $N_F$ läßt sich das eingeschobene Stahlband S geringfügig senkrecht zur Meßrichtung auslenken. Einstellelemente E, die im Hohlprofil H eingearbeitet sind, drücken das Stahlband S aus seiner Normallage, so daß die Führungsfläche $F_H$ senkrecht zur Meßrichtung einstellbar ist. Diese Maßnahme ist von Vorteil, wenn auf dem Maßstab M neben der Teilung T noch zusätzliche Markierungen vorgesehen sind, zu deren Lage die Abtasteinrichtung A an vorher festgelegten Punkten ausgerichtet werden muß. Diese Markierungen können Nullimpulsmarkierungen sein. Außerdem können durch mehrere solcher Einstellelemente Meßkorrekturen durchgeführt werden.

Es liegt im Können eines Fachmannes, die Erfindung nicht nur bei fotoelektrischen Längenmeßeinrichtungen einzusetzen, sondern beispielsweise auch bei optischen, induktiven oder kapazitiven Längenmeßeinrichtungen.

## Ansprüche

1. Präzisionslängenmeßeinrichtung zur Bestimmung der Lage zweier relativ zueinander beweglicher Objekte, wie Bett und Schlitten einer Maschine, mit einem eine Teilung tragenden Maßstab (M), einem Maßstabträgerkörper (H) und einer die Teilung (T) des Maßstabes abtastenden Abtasteinrichtung (A), wobei sich die Abtasteinrichtung an fixierten streifenförmigen Führungsflächen (F) abstützt, dadurch gekennzeichnet, daß am Maßstabträgerkörper (H) wenigstens eine Führungsfläche ($F_H$) von einem flexiblen Metallband (S) gebildet wird, das in Nuten (N) im Maßstabträgerkörper (H) lose eingeschoben ist, wobei die endseitige Längsfixierung des Metallbandes (S) an einem der genannten Objekte erfolgt.

2. Präzisionslängenmeßeinrichtung nach Anspruch 1, dadurch gekennzeichnet, daß der Maßstabträgerkörper (H) ein Hohlprofil mit einem Längsschlitz (L) in Meßrichtung ist.

3. Präzisionslängenmeßeinrichtung nach Anspruch 1, dadurch gekennzeichnet, daß der Maßstabträgerkörper (H) aus mehreren Teilstücken ($H_1$, $H_2$) besteht und daß wenigstens eine Führungsfläche ($F_H$) von einem einstückigen Stahlband (S) gebildet wird.

4. Präzisionslängenmeßeinrichtung nach Anspruch 1, dadurch gekennzeichnet, daß sowohl der Maßstab (M) als auch die Führungsflächen ($F_H$) aus lose in Nuten (N) im Maßstabträgerkörper (H) eingeschobenen Stahlbändern (S) bestehen, deren endseitige Längsfixierung an einem der genannten Objekte erfolgt.

5. Präzisionslängenmeßeinrichtung nach Anspruch 1, dadurch gekennzeichnet, daß wenigstens ein die Führungsfläche (F) bildendes Stahlband (S) geringfügig senkrecht zur Meßrichtung auslenkbar ist.

6. Präzisionslängenmeßeinrichtung nach Anspruch 5, dadurch gekennzeichnet, daß das Stahlband (S) durch wenigstens ein Einstellelement (E) auslenkbar ist.

7. Präzisionslängenmeßeinrichtung nach Anspruch 1, dadurch gekennzeichnet, daß das Stahlband mit reibungsminderndem Kunststoff beschichtet ist.

## Claims

1. Precision lenght-measuring apparatus for determining the positions of two objects which can move relative to each other, such as the bed and the slide of a machine, this apparatus possessing a measuring-bar (M) which carries a set of scale-divisions, a measuring-bar carrier-beam (H), and a sensing device (A) which senses the scale-divisions (T) on the measuring-bar and which is supported against fixed, strip-shaped guide surfaces (F), characterised in that at least one guide surface ($F_H$), on the measuring-bar carrier-beam (H), is formed by a flexible metal strip (S) which is pushed, with free movement, into grooves (N) in the measuring-bar carrier-beam (H), and which is fixed, in the lengthwise direction, at an end, to one of the abovementioned objects.

2. Precision lenght-measuring apparatus according to Claim 1, characterised in that the measuring-bar carrier-beam (H) is a piece of hollow-profile material possessing a longitudinal slot (L) in the measuring direction.

3. Precision length-measuring apparatus according to Claim 1, characterised in that the measuring-bar carrier-beam (H) is composed of a plurality of part-pieces ($H_1$, $H_2$), and in that at least one guide surface ($F_H$) is formed by a single piece of steel strip (S).

4. Precision length-measuring apparatus according to Claim 1, characterised in that both the measuring-bar (M) and the guide surfaces ($F_H$) are composed of steel strips (S), which are pushed, with free movement, into grooves (N) in the measuring-bar carrier-beam (H), and which are fixed, in the lengthwise direction, at an end, to one of the abovementioned objects.

5. Precision length-measuring apparatus according to Claim 1, characterised in that at least one steel strip (S), which forms the guide surface (F), can be slightly deflected, at right angles to the measuring direction.

6. Precision length-measuring apparatus according to Claim 5, characterised in that the steel strip (S) can be deflected by means of at least one adjusting element (E).

7. Precision length-measuring apparatus according to Claim 1, characterised in that the steel strip is coated with a friction-reducing plastic.

**Revendications**

1. Installation de mesure de longueur de précision pour la détermination de la position de deux objets mobiles l'un par rapport à l'autre, comme le banc et le chariot d'une machine, avec une règle (M) portant une graduation, un corps de support (H) de la règle et un dispositif explorateur (A) explorant la graduation (T) de la règle, le dispositif explorateur s'appuyant sur des surfaces de guidage (F) fixes en forme de bandes, caractérisée en ce que sur le corps de support (H) de la règle au moins une surface de guidage ($F_H$) est formée par une bande en métal flexible (S), qui est insérée de façon lâche dans des rainures (N) du corps du support (H) de la règle, la fixation longitudinale extrême de ladite bande en métal (S) se produisant sur l'un desdits objets.

2. Installation de mesure de longueur de précision selon la revendication 1, caractérisée en ce que le corps de support (H) de la règle est un profil creux avec une fente longitudinale (L) dans la direction de la mesure.

3. Installation de mesure de longueur de précision selon la revendication 1, caractérisée en ce que le corps de support (H) de la règle se compose de plusieurs tronçons ($H_1$, $H_2$) et en ce qu'au moins une surface de guidage ($F_H$) est formée d'une bande d'acier (S) en une pièce.

4. Installation de mesure de longueur de précision selon la revendication 1, caractérisée en ce qu'aussi bien la règle (M) que les surfaces de guidage ($F_H$) se composent de bandes d'acier (S) qui sont insérées de façon lâche dans des rainures (N) dans le corps de support (H) de la règle et dont la fixation longitudinale extrême est faite sur l'un desdits objets.

5. Installation de mesure de longueur de précision selon la revendication 1, caractérisée en ce qu'au moins une bande d'acier (S) formant la surface de guidage (F) peut être déviée légèrement perpendiculairement à la direction de mesure.

6. Installation de mesure de longueur de précision selon la revendication 5, caractérisée en ce que la bande d'acier (S) peut être déviée par au moins un élément de réglage (E).

7. Installation de mesure de longueur de précision selon la revendication 1, caractérisée en ce que la bande d'acier est enduite d'une matière synthétique diminuant le frottement.

Fig. 2

Fig. 1

0 040 684

Fig. 4

$H_1$    D    $H_2$

S, $F_H$

M, T

S    $F_H$    $N_F$    E

Fig. 3

DL    L    H

K
$N_F$
S
$F_H$
$N_M$
M

A

$N_F$
S
$F_H$
K

K    S    $F_H$    $N_F$

0 040 684